**Europäisches Patentamt**

**European Patent Office**

**Office européen des brevets**

(19)

(11) Veröffentlichungsnummer : **0 426 691 B1**

(12) **EUROPÄISCHE PATENTSCHRIFT**

(45) Veröffentlichungstag der Patentschrift :
**11.11.92 Patentblatt 92/46**

(21) Anmeldenummer : **89907082.5**

(22) Anmeldetag : **26.06.89**

(86) Internationale Anmeldenummer :
**PCT/DE89/00426**

(87) Internationale Veröffentlichungsnummer :
**WO 90/00124 11.01.90 Gazette 90/02**

(51) Int. Cl.⁵ : **B60P 1/64**

(54) **TRANSPORTFAHRZEUG MIT LASTVERSCHIEBE-RUECKSATZ MIT IN DER LAENGE VERAENDERBAREN SCHUBMITTELN.**

(30) Priorität : **28.06.88 DE 8808246 U**

(43) Veröffentlichungstag der Anmeldung :
**15.05.91 Patentblatt 91/20**

(45) Bekanntmachung des Hinweises auf die
Patenterteilung :
**11.11.92 Patentblatt 92/46**

(84) Benannte Vertragsstaaten :
**AT BE CH DE FR GB IT LI NL**

(56) Entgegenhaltungen :
**EP-A- 0 049 121
FR-A- 2 490 166
US-A- 2 453 499
US-A- 3 252 608
US-A- 4 051 968
US-A- 4 410 207**

(73) Patentinhaber : **Wilcke, Hans
Gotenstrasse 9
W-5484 Bad Breisig (DE)**

(72) Erfinder : **Wilcke, Hans
Gotenstrasse 9
W-5484 Bad Breisig (DE)**

## Beschreibung

Die Erfindung betrifft ein Transportfahrzeug oder eine Transportfahrzeugkombination, z.B. einen Sattelauflieger (Trailer) mit Zugmaschine, zum Umschlag und Transport gewichtiger, raumaufwendiger Güter wie Container, mit einer Vorrichtung zum Umschlag zwischen zwei Fahrzeugen oder einem Fahrzeug und einer fahrzeugähnlich dimensionierten Zwischenlagereinrichtung durch vornehmlich horizontale rollende oder gleitende Bewegung quer zur Fahrzeuglängsachse und zum vornehmlich rollenden Auf- und Ab laden dieser Güter über das Fahrzeugheck bei geneigtem Fahrzeugrahmen, mit unter dem Fahrzeugrahmen verschiebbaren Fahrzeugachsen und der vornehmlichen aber nicht ausschleißlichen Verwendung von Schubketten als Kraftübertragungsmittel.

Mit US-A-3 252 608 ist eine Vorrichtung zum seitwärtigen Umschlag von Containern zwischen Fahrzeugen bekannt. Von Nachteil ist, daß z.B. die Stützvorrichtung (14) an Punkten unter der Last angreift, die für z.B. ISO-Container nicht zulässig sind. Zudem lassen die in Europa zugelassenen Container-Tragwagen der Eisenbahngesellschaften nicht zu, daß unter dem darauf abgesetzten Container eine der Erfindung entsprechende Verschiebeeinrichtung eingebracht oder herausgenommen werden kann.

Eine weitere Vorrichtung dieser Art ist mit E-A-0049 121 bekannt. Von Nachteil ist hier, daß sie eine Vielzahl von hydraulischen und mechanischen Teilen erfordert, also aufwendig ist, daß ein Abladen über das Heck nicht möglich ist und es zweifalhaft erscheint, daß ein seitliches Absetzen am Boden ohne umkippen möglich ist.

Es sind weitere Vorrichtungen zum Umschlagen, Auf- und Abladen von Großbehältern, z.B. ISO-Containern (DE-A- 36 33 862, DE-A-30 26 30 747, DE-A-25 37 228, DE-A-25 35 052 u.a.) quer zur Fahrzeug-Längs achse bekannt. Insbesondere wegen der Aufgabenstellung "Aufund Abladen quer zur Fahrtrichtung" sind diese Erfindungen nach Kosten und Technik so aufwendig, daß sich ihr Einsatz nur in speziellen Fällen rentriert, vor allem aber nicht im flächendeckenden Einsatz und zum Einbinden des Hinterlandes in der Dritten Welt in den internationalen Container-Verkehr. Weiter sind Vorrichtungen zum Auf- und Abladen von z.B. ISO-Containern über das Fahrzeugheck bekannt. (Z.B. DE-A-33 29 677, DE-A-24 51 165 u.a.) Sie erfordern jedoch entweder auf dem Fahrzeug selbst oder auf dem Zugfahrzeug eine hydraulische Anlage, auf dem tragenden Fahrzeug gewichtige und aufwendige hydraulische Einrichtungen nd sind teilweise nur für Containergrößen bis 20' brauchbar.

Weitere Nachteile bekannter Einrichtungen sind, daß sie die zulässige Fahrzeugbreite/Containerbreite überschreiten oder wegen hohen Eigengewichts voll beladene Container nicht oder nur mit Sondergenehmigung transportieren können. Andere Einrichtungen sind beim Abladen schwerkraftabhängig und können deshalb Container nicht über eine Rampe abladen, die z.B. den direkten Zugang zur Produktionasstätte erschleißen würde. Weiter ist bei herkömmlichen Sattelaufliegern zum Containertransport von Nachteil, daß die Lasten nur in bestimmten Positionen befestigbar sind un eshalb eine optimale Verteilung der Last auf die Achsen von Zugmaschine und Trailer nich möglich ist oder besondere Einrichtungen auf dem Trailer erfordert.

Aufgabe dieser Erfindung ist es, ein Umschlag- und Transportfahrzeug für Großbehälter, z.B. Container sowie großvolumiges und schwergewichtiges Gut vorzustellen, das die nachfolgenden Aufgabenstellungen zu erfüllen vermag:

- Umschlag quer zur Fahrtrichtung nur auf etwa gleichem Niveau vornehmlich rollend oder gleitend zur Reduzierung des Aufwandes,
- Aufteilung der notwendigen Hubarbeit in mehrere zeitverschobene Teilvorgänge zur Reduzierung der Leistungserfordernisse,
- Auf- und Abladen vornehmlich rollend oder gleitend über das Fahrzeugheck mit Containern aller Größen voll abgeladen mit geringstem technischen Aufwand,
- Transport voll abgeladener Container unter Einhaltung von Abmessungs- und Gewichtsvorschriften,
- Durchführung weitgehend ller Operationen mit herkömmlichen Zugmaschinen ohne Zusatzausrüstung und mit den bei ihnen verfügbaren Energiequellen,
- Nutzung der Eingenschaften der Luftfedern zur Einsparung zusätzlicher technischer Einrichtungen,
- Optimieren der Lastverteilung zwischen Sattellast der Zugmaschine und Achslasten des Trailers nach Betriebsbedürfnissen und ökonomischen Erfordernissen,
- Entladen/Laden auch horizontal oder leicht ansteigend
- Kippen voller Container aller Größen einschleißlich 40' zur Entleerung mit Neigung bis ca. 60°,
- Aufstellen von Containern aller Größen Längsachse senkrecht zu Bodenfläche sparender Zwischenlagerung und Entleerung/Füllung,
- Reduzieren des Lagerflächenbedarfs insbesondere von Leer-Containern (bei 40' Containern auf etwa 1/6) ohne zusätzliche Großgeräte (entspricht etwa der Lagerung in 5 Ebenen).

Im folgenden wird die Erfindung anhand von Zeichnungen näher erläutert. Dabei zeigen die Zeichnungen lediglich Ausführungsbeispiele und schließen andere Gestaltungsformen nicht aus. Zur Vereinfachung der Darstellung und wegen der Bedeutung der Besonderheiten des Fahrgestells des Trailers für alle Funktionen wird zuerst der Ab- und Aufladevorgang und dann der Umschlagvorgang behandelt werden.

Fig. 1 zeigt einen Trailer gemäß dieser Erfindung in Transportstellung,

Fig. 2 den Trailer geneigt und bereit zum Entladen eines 40' - ISO-Containers,

Fig. 3 das Heck des Fahrzeugs abgesenkt und bereit, einen Container aufzunehmen,

Fig. 4 die Querverladeeinrichtung zwischen Waggon und Trailer in Fahrzeug-Längsachsen gesehen,

Fig. 5 zeigt den Containeranschlag (60) mit Wälzwagen (53) und die Schiene (58'), beide im Schnitt und

Fig. 6 einen Längsschnitt durch den Wälzwagen (53) und die Schienen (58 + 58').

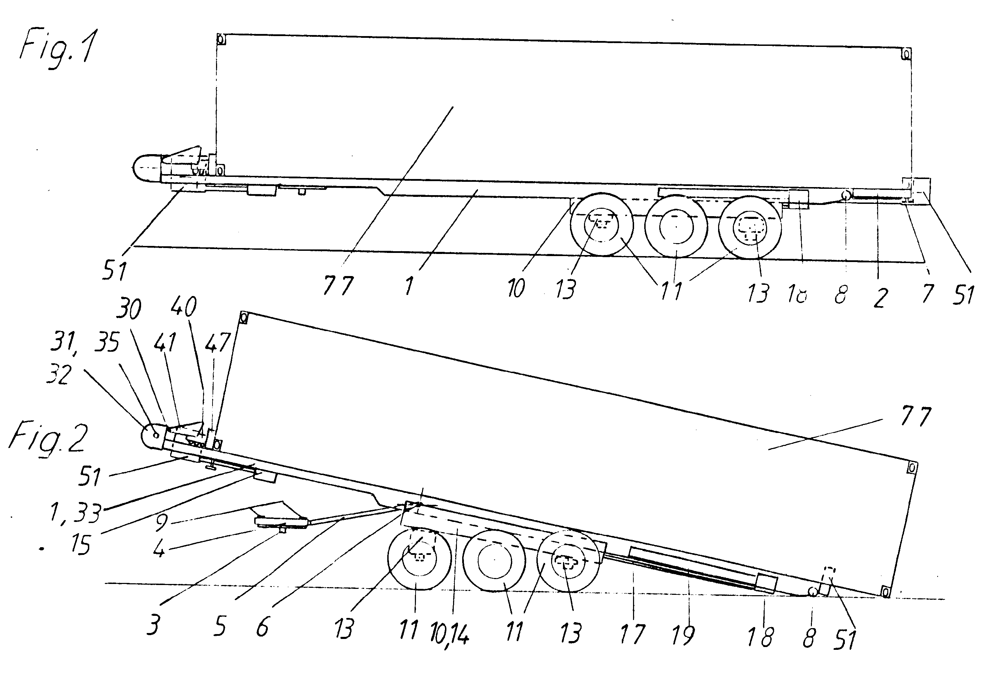

Fig. 1 zeigt den Fahrzeugrahmen (1) und den Fahrwerksblock gebildet aus Rädern(11), Achsen(12), Federn (13) und Längsträgern (14) und den notwendigen nicht weiter detaillierten Verbindungselementen. Der Fahrwerksblock (10) ist in Fahrtrichtung verscheibbar mit dem Fahrzeugrahmen (1) verbunden. Bei Ausführung des Fahrzeugrahmens in Doppel-T-Form können die Längsträger(14) mit Klauen oder in ganzer Länge den Untergut des Fahrzeugrahmens umfassen , andere Verbindungsmöglichkeiten sind denkbar.

Die Berührungsflächen zwischen Fahrzeugrahmen (1) und Längsträgern (14) können als Gleitflächen gestaltet, mit gleitfreundlichen dauerhaften Schichten belegt oder die Längsträger (14) mit Rollen oder Wälzwagen versehen sein.

Zum bewegen des Fahrwerkblockes (10) und des Containers (77) jeweils gegenüber dem Fahrzeugrahmen (1) sind gemäß dieser Erfindung Schubketten (17,30,50) mit zugehörigem, in der Regel selbstsperrendem Antrieb vorgesehen. Für diese Schubketten mit Antrieb sind gesondert Schutzrechte beantragt. Hier seien diese Teile nur zum Verständnis ihrer Funktion und ihrer Nutzung für diese Erfindung geschildert.

Die Schubketten(17,30,50) sind herkömmlichen Rollenketten ähnlich aufgebaut, die Laschen sind jedoch einseitig breiter, stoßen bei gestreckter Kette gegeneinander und bilden so eine im Rücken steife Kette, die sowohl zum Übertragen von Schubwie auch Zugkräften etwa gleicher Größenordnung geeignet ist. die einzelnen Kettenglieder werden zusätzlich mittels beweglicher Bolzen auf der nicht rückensteifen Seite der Kette gegen ein Einknicken gesichert, sodaß die Kette in gestrecktem Zustand allseitig steif ist. Zum Antrieb und zum Umlenken der Kette werden die üblichen Kettenräder benutzt, die mit ihren Zähnen die Sicherungsbolzen zwischen den Kettengliedern betätigen und so ein Einknicken der Kette ermöglichen. Zum Vrescheiben des Fahrwerkblocks (10) gegenüber dem Fahrzeugrahmen (1) ist mindestens eine Schubkette (17) am Fahrwerksblock (10) befestigt und über das mit dem Fahrzeugrahmen (1) fest verbunden Antriebsgehäuse (18) zum Magazin (19) geführt.

Das Antriebsgehäuse (18) ist über ein selbstsperrendes Getriebe (z.B. ein Schneckengetriebe) mit einem Antriebsmotor verbunden. Zusätzlich sind Fahrwerksblock (10) und Fahrzeugrahmen (1) in verscheidenen Positionen gegeneinander verriegelbar. Zur berücksichtigen ist, daß nach den Gestaltungsüberlegungen dieser Erfindung von diesem Antrieb vornehmlich nur Stellkräfte zur waagerechten Bewegung des Fahrwerksblocks (10) auch unter voller last zu erbringen sind, nich aber Veränderungen der Schwerpunktlage von Fahrzeug und Last bewirkt werden sollen.

Alternativ kan die Bewegung des Fahrwerkblocks (10) gegenüber dem Fahrzeugrahmen (1) auch durch ein andersartiges Stellglied, z.B. einen pneumatischen oder hydraulischen Zylinder, durch ein umlaufendes Seil, eine Kette mit Antrieb, durch Zahnstangen-Antrieb oder einen sonstigen Linearantrieb erfolgen.

Der Fahrwerksblock (10) ist gemäß dieser Erfindung vornehmlich mit Luftfedern (13) ausgestattet, mit gleichen Wirkungen denkbar sind aber auch hydropneumatische Federungen oder mechanische Federungen mit Höhenverstellungen, z.B. durch spezielle Stoßdämpfter-Ausführungen.

Die Luftfedern (13) oder die sonstigen Stellmechanismen sind so gestalten, daß der Fahrzeugrahmen (1) über die Längsträger (14) durch Entlüften der Federbälge der hinteren Achse und gleichzeitige Belüftung der Federbälge der vorderen Achse nach hinten soweit absenkbar ist, daß er den Boden berührt, sofern der Fahrwerksblock (10) weit genug nach vorn verschoben worden ist.

Zur sicheren Durchführung aller Bewegungsabläufe und um arbeitsaufwendige Entkopplungsvorgänge zu vermeiden, ist der Königszapfen (3) des Aufliegers an einer Königszapfenplatte (4) befestigt, die wiederum beweglich über die Schwinge (5) und Achse (6) mit dem Fahrzeugrahmen (1) verbunden. Dadurch bleibt auch bei geneigtem Fahrzeugrahmen (1) eine kraftschlüssige Verbindung zum Zugfahrzeug erhalten. In Fahrstellung liegt die Königszapfenplatte (5) zweckmäßig geführt und gesichert zwischen den Holmen des Fahrzeugrahmens (1). In einer weiteren Gestaltungsform der Erfindung ist der Königszapfen (3) so gestaltet, daß er auch ein Kippmoment des Aufliegers nach hinten übertragen und das gewicht der Zugmaschine als Gegenkraft zum Kippmoment nutzen kann. Die Königszapfenplatte (4) und die Luftfedern (13) oder die Achsen (12) sind mit Sensoren zum Ermitteln der Belastung ausgestattet. Die gewonnenen Meßwerte werden einem Auswerteund Anzeigegerät (15) zugeleitet. Zusätzlich können Niveau-Impulsgeber vorgesehen werden.

Die gewonnenen Meßwerte werden duch wahlweise nutzbare Programme ausgewertet und kombiniert und beaufschlagen z.B. den Schubkettenantrieb (18) zur gleichmäßigen Verteilung der Achslasten, Füll- und Entleerungsventile der Luftfedern z.B. zum Anliften einer Achse bei geringer Last oder langsamer Kurvenfahrt und zur Niveauregulierung nach den jeweiligen Bedürfnissen. Dem Auswerte- und Anzeigegerät (15) und seinen Programmen können weitere Betreibsablauf- und Sicherheitsfunktionen zugeordnet werden.

Das rückwärtige Ende des Fahrzeugrahmens (1) ist teleskopartig einziehbar in den Fahrzeugrahmen gestaltet. Die minimale Einzugslänge ist bestimmt duch die Höhe des ggflls. unten abgeschrägten Fahrzeugrahmens einerseits und dem vorgesehenen Neigungswinkel des Rahmens andererseits. Die einziehbare Länge soll möglichst groß sein, ( um eine signifikante Verkürzung der Fahrzeuglänge beim Tranport von nur einem 20 Container zu erreichen), ist aber begrenzt durch die Festigkeit von voll beladenen ISO-Containern, sofern nicht die unteren Eckbeschläge sondern der Längsrahmen lasttragend unterstützt wird.

Am rückwärtigen, nicht einziehbaren Ende des Fahrzeugrahmens (1) sind Rollen (8) vorgeshen, die den Rahmen (1) auf dem Boden abstützen und beim Entladevorgang eine rollende Bewegung des Fahrzeugrahmens (1) unter dem Container (50) hervor ermöglichen.

In Fällen, in denen bei noch unterstütztem Schwerpunkt des Systems unter Berücksichtigung der Hubhöhe der Redern der Fahrzeugrahmen (1) nicht so weit geneigt werden kann, daß der Container (77) und der Fahrzeugrahmen (1) hinten den Boden berühren, sind erfindungsgemäß zwei Rollen gleitend unter dem Fahrzeugrahmen vorgesehen, die das hintere Ende des Fahrzeugrahmens gegen den Boden abstützen, noch ehe der Lastschwerpunkt des Systems sich hinter die hintere Achse bewegt. Die Rollen sind mit dem Fahrwerksblock verbindbar und werden von diesem weiter nach vorn mitgenommen, bis das hintere Ende des Fahrzeugrahmens und der überhängende Container den Boden berühren.

Zum Bewegen des Containers beim Be- und Entladen sind erfindungsgemäß mindestens eine, in der Regel zwei Schubketten (30) vorgesehen, mit deren Hilfe sowohl Zugkraft als auch Schubkraft auf den Container ausgeübt werden kann. An der Stirnseite des Fahrzeugrahmens (1) sind Antriebsgehäuse (3 ) für jede Schubkette (30) angebracht. Sie enthalten Antriebs-Kettenräder, die in der Regel über eine gemeinsame Welle (35) mit einem selbstsperrenden Getriebe von einem E-Motor oder einem Pneumatik-Motor angetrieben werden.

Die unbelastet aus dem Antriebsgehäuse (31) austretenden, nicht genutzten Teile der Schubkette (30) werden in einem gestreckten Magazin (33) das in der Regel Teil des Fahrzeugrahmens (1) ist, aufgenommen.

Die belasteten Enden der Schubketten (30) sind über Hubwinkel (41) mit Wälzwagen (40) verbunden. Diese rollen z.B. auf dem Obergurt des Fahrzeugrahmens (1) ab und übertragen während des Auf- und Abladens den stirnseitigen Lastanteil des Containers auf das Fahrzeug.

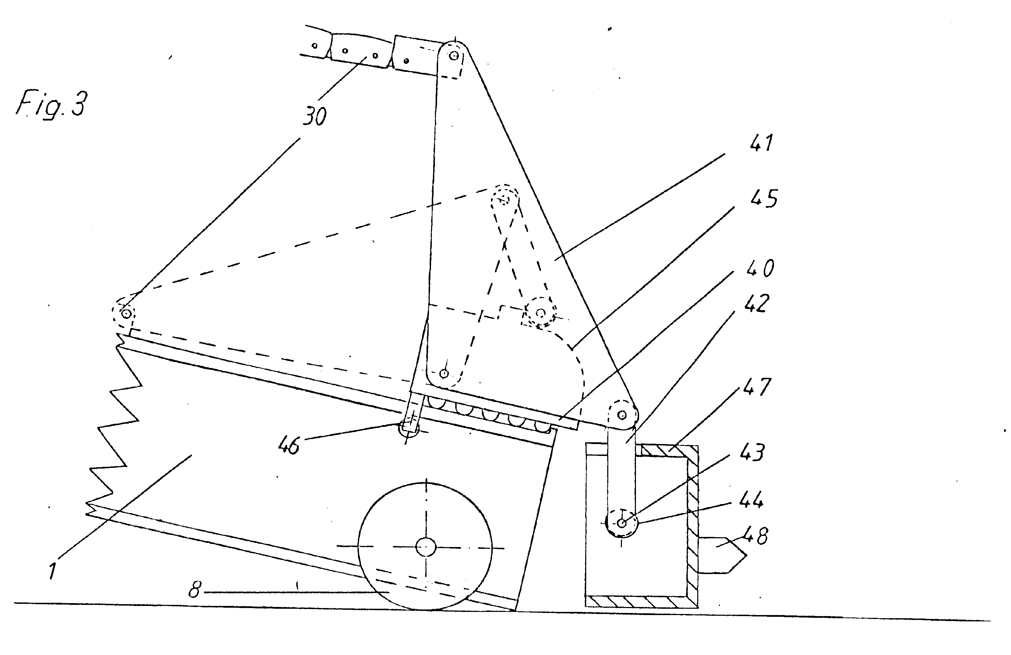

An den Hubwinkeln (41) sind Traglaschen (42) befestigt, die wiederum drehbar am Containerträger (47) ( in Fig. 3 im Schnitt gezeichnet) befestigt sind. Am Containerträger (47) befinden sich nach hinten ragende Befestigungsglieder (48) für ein Stirnseitiges Anschlagen des Containers.

Beim Verladen des Containers ergibt sich folgender Arbeitsablauf: (vergl. Fig. 3)
Durch Rückwärtsbewegen des Fahrzeugs gleiten die Befestigungsglieder (48) in die Eckbeschläge des Containers und werden dort befestigt.

Durch Kürzen der Schubketten mit dem Antrieb (31) führen die Hubwinkel (41) eine Drehbewegung aus und heben über die Laschen (42) den Containerträger (47) mit dem Container stirnseitig an. Dabei kommen die zwischen den Laschen (42) angebrachten Rollen von größerem Durchmesser als Laschenbreite gegen die Kurvenbahnen (45) der Wälzwagen (40) und übertragen in zunehmendem Maße das Containergewicht direkt auf den Wählzagen. Die Wälzwagenführungen (46) verhindern dabei ein Kippen der Wälzwagen. Sobald die Rollen (44) das Ende der Kurvenbahnen (45) errreicht haben (gestrichelt gezeichnete Positionen von (41) und (42) wird die Stirnseite des Containers, nun höher als der Obergut des Fahrzeugrahmens (1), entweder nach vorn gezogen oder aber, bei gelösten Fahrzeugbremsen, wird der Fahrzeugrahmen (1) unter den Container bewegt. Durch geeingnete Gestaltung der Kurvenbahnen (45) kann gewährleistet werden, daß bei etwa gleicher Zugkraft der Schubketten (30) trotz Verringerung des wirksamen Hebelarms an den Hubwinkeln (41) das Anheben der Stirnseite des Containers vollendet werden kann.

Während der Bewegung der Wälzwagen (40) auf dem Fahrzeugrahmen (1) dienendie Wälzwagenführungen (46) auch als seitliche Führung für die Wälzwagen.

In Transportstellung werden der oder die Container in herkömmlicher Weise mit Twistlocks (7) auf dem Fahrzeugrahmen befestigt. Dabei können die vorderen Twistlocks (7) gegenüber dem Obergurt des Fahrzeugrahmens (1) leicht höher gelegt und mit einer Auflaufschrägung versehen sein, um während der Fahrt die Wälzwagen (40) zu entlasten.

In Fällen, in denen über eine erfindungsgemäße Auslegung der Federn (13) eine hinreichende Neigung des Fahrzeugrahmens (1) nicht erzielt werden kann, wird zwischen Königszapfenplatte (4) und Fahrzeugrahmen ein Hubglied vorgesehen, z.B. ein aufblasbarer Balg, durch den die notwendige Kraft zum Neigen des Fahrzeugrahmens erzeugt wird.

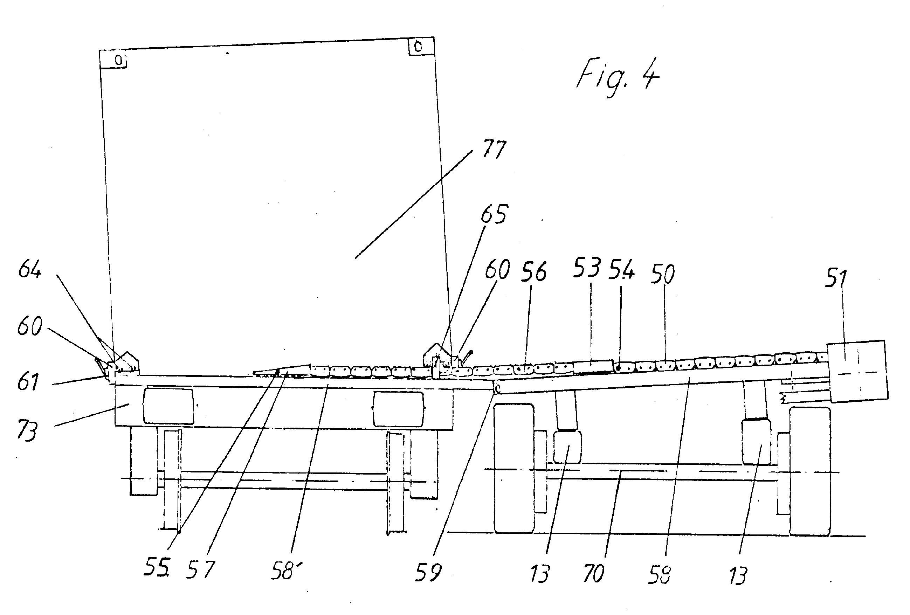

Die Umschlageinrichtung ist in einer Alternative in Seitenansicht in Fig. 4 dargestellt. Zeichnung und Beschreibung liegt zugrunde, daß ein Container von einem Eisenbahwaggon (73) auf den Trailer (70) übernommen werden soll. An Stirnund Heckseite des Trailers (70) sind, um die Schwenkachsen (52) drehbar, Schubkettenantriebe für das Umschlagen angebracht. In Ruhestellung sind die in das Fahreugprofil eingeschwenkt, in Arbeitsstellung ragen sie über das Fahrzeugprofil hinaus. Der Trailer ist mit der Regel festen Schienen (58) und beweglichen, am Fahrzeug vrstaubaren Schienen (58') quer zur Fahrtrichtung als Rollbahn für den Container ausgestattet. Dabei werden die Schienen (58') z.B. mit den Schienenhaken (59) mit den Schienen (58) verbunden.

Auf jeder Schiene (58) rollt ein Wälzwagen (53), der mit der vom Schubkettenantrieb (51) bewegten Schubkette (50) mit dem Verbindungsbolzen (54) verbunden ist. Die Schubkette (50) ist in der Regel mit ihren rückensteifen Gliedteilen nach oben installiert. Am Wälswagen (53) ist nach der anderen Seite eine Schubkettenverlängerung (56) angebracht, hier zeigen die rückensteifen Gliedteile nach unten, um so sicherzustellen, daß die Kette auch gei zueinander geneigten Ladeflächen (71 + 74) sich dieser Neigung anpassen kann.

Am anderen Ende der Schubkettenverlängerung (56) ist der keilförmige Wälzwagen (57) lösbar befestigt. Seine Oberfläche liegt etwas höher als die anschließende Schubkettenverlängerung (56).

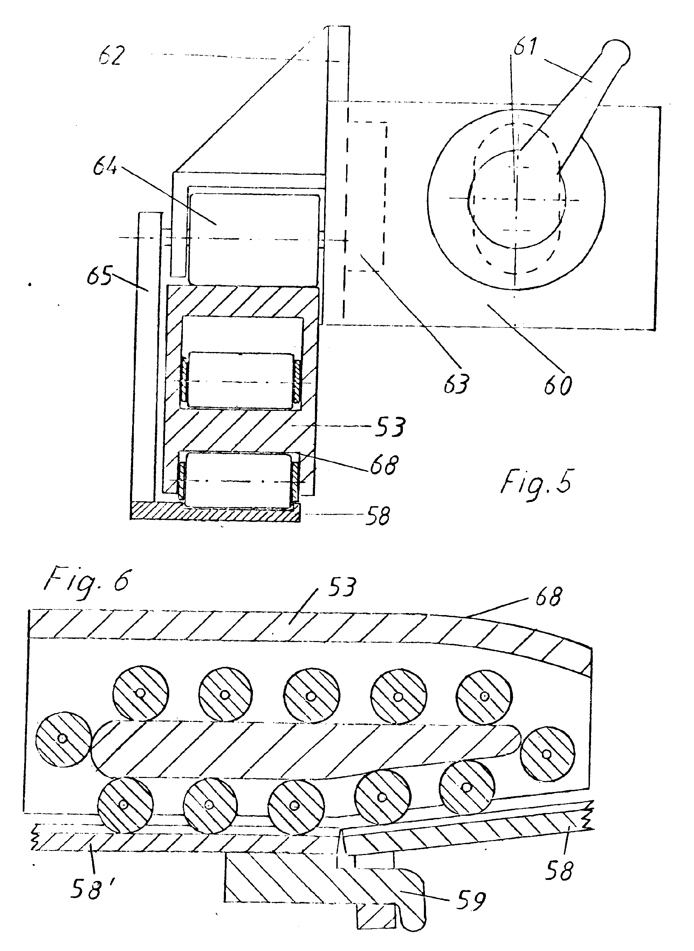

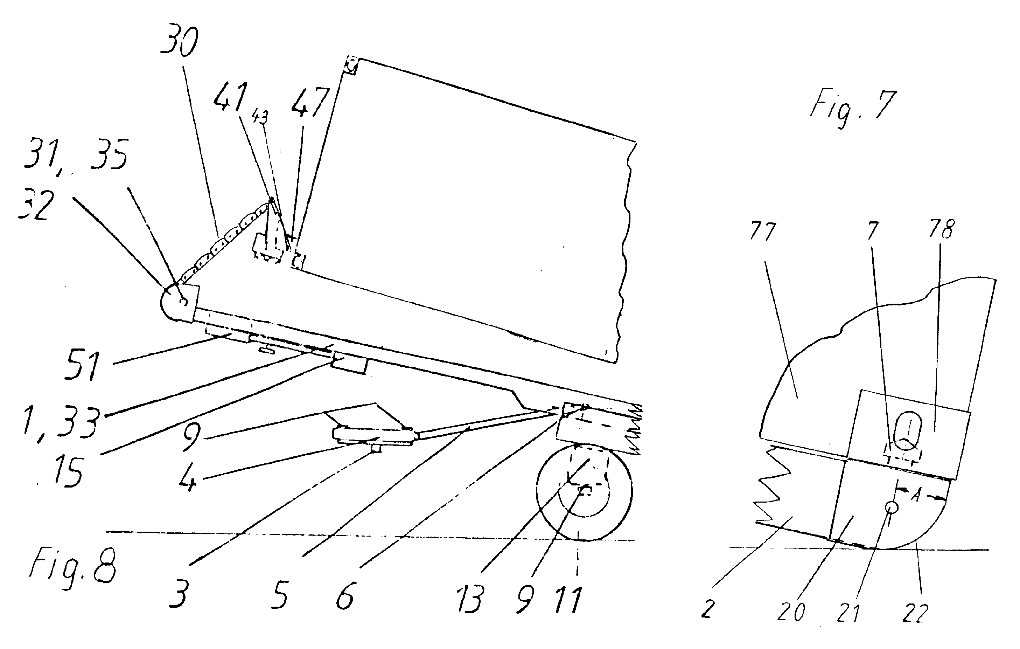

Die Oberfläche beider Wälzwagen sind als Roll- bezw. Gleitflächen ausgebildet, die einseitig (57) oder beidseitig (53) etwas abgeflacht sind (vergl. Fig. 6).

Die Wälzwagen (53 + 57) können, wenn relativ größere Neigungswinkel zwischen den Schienen (58 + 58') erwartet werden, mit einer um den etwa erwarteten maximalen Winkel gebrochenen Rollfläche (68) ausgestattet sein.

In den Eckbeschlägen (78) des Containers (77) sind mit Twistlocks (61), die in die längsseitigen Beschlagöffnungen eingreifen, losnehmbar Containeranschläge (60) befestigt. Ihre Seitenplatten (62) greifen um den Eckbeschlag (78) herum und sind stirnseitig mit Paßstücken (63) ausgestattet, die den Eckbeschlagsöffnungen entsprechen. Durch Twistlock (61) und Paßstück (63) wird ein gleichmäßiger Lastübergang beim Umschlag sichergestellt.

An der Seiten-platte (62) sind mehrere oder eine Rolle (64) oder eine entsprechende Gleitfläche angebracht, die das Containergewicht auf die Wälzwagen überträgt.

Für die Anbringung der Rollen (64) an der Seitenplatte können je nach der Aufgabenstellung unterschiedliche Alternativen zweckmäßig sein. Ist der Container, wie heute auf Eisenbahnwaggons üblich, auf feste Verriegelungszapfen (75) aufgesetzt, so muß er um die Höhe der Verriegelungszapfen angehoben werden, damit der Container anschließend seitwärts verschoben werden kann. Dementsprechend müssen die Rollen (64) verhältnismäßig tief angesetzt sein.

Sind dagegen die zu entladenden Fahrzeuge mit absenkbaren Twistlocks aufgestattet, so genügt ein Anheben um ein Geringes, um den Container rollbar zu machen. Dementsprechend können die Rollen (64) höher an der Seitenplatte (62) angebracht sein.

In einer Alternative können, falls erfoderlich, am Trailer (70) im Bereich der Schienen (58) beiklappbare oder einziehbare Stützen angeordnet sein.

Für den Containerumschlag ergibt sich etwa folgender Arbeitsablauf:

Der Trailer (70) wird parallel zum Waggon (73) möglichst nahe bei diesem aufgestellt und die Schubkettenantriebe (51) ausgeschwenkt.

Durch Bedienung der Luftfedern (13) wird der Trailer (70) entweder ganz auf das Niveau des Waggons (73) eingestellt oder aber einseitig so geneigt, daß die beiden Ladeflächen (71 + 74) dort, so wie sich am nächsten sind, ein Niveau haben.

Die Schienen (58') werden neben dem Container (77) auf dem Waggon (73) ausgelegt und mit den Schienenhaken (59) mit dem trailer verhakt.

Die z.B. auf den Schienen (58') gehalterten Wälzwagen (53) und (57) mit Schubkettenverlängerung (56) werden mit dem Verbindungsbolzen (54) mit der Schubkette (50) verbunden.

An den Container-Eckbeschlägen (78) werden die Container-Anschläge (60) angebracht und verriegelt.

Nun wird die Schubkette (50) ausgefahren. Der keilförmige Wälzwagen (57) schiebt sich unter die Rollen (64) des jeweils ersten Container-Anschlages (60). Dadurch wird der Container (77) einseitig angehoben. Dabei dreht sich die Stützlasche (65) durch Schwerkraft in eine senkrechte Position und stützt den Container-Anschlag (60) auf der Schiene (58') ab.

Mit dem Fortbewegen des keilförmigen Wälzwagens (57) geht das Gewicht des Containers über die Stützlasche (65) auf die Schiene (58') über und die Schubkette kann sich unbelastet unter dem Container-Anschlag (60) hindurchbewegen. Anschließend hebt der keilförmige Wälzwagen (57) den zweiten Container-Anschlag (60') an. Der container ist nun frei von den Verriegelungszapfen.

Duch diesen Ablauf wird der Grundgedanke deutlich, der diesem Verfahren eigen ist: die notwendige Hubarbeit wird einerseits auf zwei stirnseitige Bewegungsmechanismen verteilt und andererseits durch das Nach-

5

einander des Anhebens der beiden Eckbeschläge einer Seite des Containers nochmals halbiert. Dadurch können Kraftquellen und Antriebsaggregate in Dimensionierung und Leistung geringer gehalten werden.

Bei Anlagen, die wegen versenkbarer Twistlocks nur eine geringe Hubarbeit erfordern, lönnen die Schubkettenantriebe auch zeitbersetzt betätigt werden, sodaß nur 1/4 des Containergewichts gleichzeitig als Hubleistung erbracht werden muß. Einerseits kann der Container die auftretende geringe Verdrillung aufnehmen, andererseits kann so ein Energieerzeuger noch geringerer Leistung eingesetzt werden ( z.B. batteriegespeister Elektro-Antrieb mit Batterie-Nachladung während der Tranportzeit).

Gegen Ende der Schubbewegung der Schubkette (50) hat sich der Wälzwagen (53) unter den Container-Anschlag (60) bewegt ud diesen soweit angehoben, daß die Stützlasche (65) entlastet ist.

Der Container (77) ist umschlagbereit.

Durch Umschalten des Schubkettenantriebs (51) auf Zug rollt der Container (77) auf den Wälzwagen (53 + 57) auf den Trailer (70). Hier wird er auf ausfahrbaren Twislocks abgesetzt und verriegelt. Die Wälzwagen (53 + 57) werden auf die Schienen (58') zurückgeschoben. Dabei setzt sich der Container (77) auf den Unterlagen der Twistlocks ab.

Beim Umschlag vom Trailer auf den Waggon nimmt der Mitnehmerbolzen (55) des Wälzwagens (57) die Stützlasche (65) mit, sodaß der Container anschließend auch auf dieser Seite auf den festen Verriegelungszapfen abgesetzt werden kann. Zum Erfüllen der Aufgabe "Kippen des Containers und Aufstellen auf der Stirnseite" werden (vergl. Fig. 3) die Verbindungen zwischen Hubwinkel (41), Traglasche(42) und Traglaschenachse (43) losnehmbar gestaltet und, in beladenem Zustand, Hubwinkel (41) undTraglaschenachse (43) direkt miteinander verbunden. Ferner ist der Schubkettenantrieb (30) für einen variablen Austrittswinkel der Kette bis ca. 80° und mit notwendiger Schubkraft ausgestattet. Die Containerbefestigungen am Fahrzeugheck sind um eine waagerechte Achse drehbar gestaltet.

Nachdem der Fahrzeugrahmen (1) soweit geneigt wurde, daß der Container (77), auf den Twistlocks befestigt, mit diesen Bodenberührung hat, wird durch Betätigen des Schubkettenantriebes (30) der Container (77) bis ca. 60° geneigt und bei Installation von Zusätzlicher Ketter kann er auch auf seiner Stirnseite abgestellt werden.

Herkömmliche ISO-Container, nur mit einer Doppeltür an einer Stirnseite ausgestattet, können als Zwischenlager und zur Entleerung mit Toren nach unten abgestellt und später durch zurück bringen in Normalstellung und erneutes Aufstellen zum Füllen mit Toren nach oben bereitgestellt werden. Diese Form der Aufstellung erbringt eine Reduzierung des Platzbedarfs für die Materialeinlagerung auf etwa 1/6 und entspricht in etwa der sonst nur mit schwerem Gerät maximal möglichen Einlagerung con Containern in 5 Ebenen, dies ohne weitere aufwendige Geräte und Einrichtungen.

In einer alternativen Ausführung kann die schubkettengetriebene Ladeeinrichtung ( 30 - 35, 40 - 48) statt am Sattelauflieger auf der Zugmaschine hinter dem Faherhaus montiert sein. Dadurch kann beim Betreiben mehrerer Auflieger mit einer Zugmaschine an Anlagekosten gespart werden.

Beim Containertransport im Ro-Ro-Verkehr ist es bisher üblich, die Container auf Roll-Trailer zu verladen und mit diesen zu verschiffen. Das bedeutet eine Minderung der verfügbaren Nutzlast des Schiffes und hohe Investitionskosten. Dabei werden die Rolltrailer in der Regel über Schwanenhälse mit Traktoren bewegt, die eine höhenverstellbare Sattelkupplung besitzen. Wird der Schwanenhals mit der erfindungsgemäßen Ladeeinrichtung (30 - 35), 40 -48) in angepasster Form ausgestattet, so können die Container im Ro-Ro-Schiff ab- bezw. aufgeladen werden. Damit können vorhandene Hafenausstattungen mit geringem Investitionsaufwand und ohne wesentliche Änderung des Handlingverfahrens effktiver genutzt werden.

In einer weiteren Anwendung der dieser Erfindung zugrundeliegenden Gedanken wird die Verschiebbarkeit des Fahrweikblocks (10) und die Neigung des Fahrzeugrahmens (1) zur Nutzung des Fahrzeugs im Abschleppdienst für havarierte Fahrzeuge genutzt. Dabei kann auf die Nutzung weiterer Baugruppen gemäß dieser Erfindung verzichtet werden.

Mit Fahrzeugen gemäß dieser Erfindung kann mit geringen Investitionskosten ein Auf- und Abladen von Containern auch außerhalb von Terminals bei Versendern/Empfängern erfolgen. Es wird eine Be- und Entladung der Container zu ebener Erde ermöglicht und weiter können Ladegeschäft und Transportvorgang voneinander zeitunabhängig durchgeführt werden.

Im Ro-Ro-Schiffsverkehr kann z.B. durch direkte Absetzen der Container in Schiff vom Straßentransportfahrzeug ein Umschlagvorgang eingespart oder das Mitverfrachten von Roll-Trailern eingespart werden.

Die aufgezeigten alternativen Gestaltungen zeigen eine hohe Anpassungsfähigkeit der Neuentwicklung an betriebliche Erfordernisse und eine flexible Integration in bestehende Systeme auf.

Containerlader - Teileliste

| | | | | |
|---|---|---|---|---|
| 1 | Fahrzeugrahmen | 40 | Wälzwagen |
| 2 | rückwärtiges Ende | 41 | Hubwinkel |
| 3 | Königszapfen | 42 | Traglasche |
| 4 | Königszapfenplatte | 43 | Traglaschenachse |
| 5 | Schwinge | 44 | Rolle |
| 6 | waagerechte Achse | 45 | Kurvenbahn am Wälzwagen |
| 7 | Container-Verriegelung | 46 | Wälzwagen-Führung |
| 8 | rückwärtige Rollen | 47 | Containerträger |
| 9 | Schwingen-Druckgeber | 48 | |
| | | 49 | |
| 10 | Fahrwerksblock | 50 | Schubkette Umladen |
| 11 | Räder | 51 | Schubkettenantrieb Umladen |
| 12 | Achse | 52 | Schwerachse |
| 13 | Luftfeder | 53 | Wälzwagen Umladen |
| 14 | Längsträger | 54 | Verbindungsbolzen |
| 15 | Anzeigegerät | 55 | Mitnehmerbolzen |
| 16 | Fahrwerks-Stellglied | 56 | Schubkettenverlängerung |
| 17 | Schubkette Fahrwerk | 57 | keilförmiger Wälzwgen |
| 18 | Schubkettenantrieb Fahrwerk | 58 | Schienen |
| 19 | Magazin | 59 | Schienenhaken |
| 20 | | 60 | Container-Anschlag |
| 21 | | 61 | Twistlock |
| 22 | | 62 | Seitenplatte |
| 23 | | 63 | Paßstück |
| 24 | | 64 | Rollen |
| 25 | | 65 | Stützlasche |
| 26 | | 66 | |
| 27 | | 67 | |
| 28 | | 68 | Rollfläche der Wälzwagen |
| 29 | | 69 | |
| 30 | Schubkette Abladen | 70 | Trailer |
| 31 | Schubkettenantrieb Abladen | 71 | Ladefläche Trailer |
| 32 | selbstsperrender Antrieb | 72 | |
| 33 | Kettenmagazin | 73 | Waggon |
| 34 | | 74 | Ladefläche Waggon |
| 35 | gemeinsame Welle | 75 | Verriegelungszapfen |
| 36 | | 76 | |
| 37 | | 77 | Container |
| 38 | Rollen | 78 | Eckbeschlag |
| 39 | | | |

**Patentansprüche**

1. Transportfahrzeug mit Lastverschiebe-Rüstsatz mit in der Länge veränderbaren Schubmitteln, dadurch gekennzeic hnet, daß die Schubmittel aus mindestens einer Schubkette (17,30,50) gebildet werden, die nach dem Austritt aus dem Schubke ttenantrieb (18,31,51) in beiden Freiheitsgraden gesteift eine endlos verlängerbare Schub- und Zugstange bilden und daß am Ende der Schubmittel eine anpassungsfähige Kraftübertragungseinrichtung angebracht ist.

2. Transportfahrzeug mit lastverschiebe-Rüstsats nach Anspruch 1, dadurch gekennzeichnet, daß die Schubkette (50) in Teilbereichen mit unterschiedlichen Freiheitsgraden ausgestattet ist.

3. Transportfahrzeug mit Lastverschiebe-Rüstsatz nach Anspruch 1 u. 2, dadurch gekennzeichnet, daß mindestens zwei Rüstsätze (50 - 65) mit Schubrichtung quer zur Fahrtrichtung eines Fahrzeugs (70) und bei Bedarf in der Fahrzeug-Längsachse verscheibbar und bei Nichtbenutzung in dss Fahrzeugprof il inklappbar angebracht sind.

4. Transportfahrzeug mit Lastverschiebe-Rüstsatz nach Anspruch 1,2 und 3, dadurch gekennzeichnet, daß die Schubketten (50) mit Wälzwagen (53,55) verbunden sind, insbesondere die äußeren Wälzwagen (53) keilförmig ausgebildet sind, auf Schienen (58,58') oder anderen Rollflächen bewegbar sind und unter Container-Anschläge (60) oder unter Container-Eckbeschläge (78) oder andere Teile eines Containers oder einer Last greifen und die Schubketten (50) zur Aufteilung der Hubarbeit zeitversetzt betätigbar sind.

5. Transportfahrzeug mit Lastverschiebe-Rüstsatz nach Anspruch 1, dadurch gekennzeichnet, daß mindestens 1 Rüstsatz (30 - 47) an der vorderen Stirnseite eines Fahrzeugs (70) oder seiner Ladefläche (71) angebracht ist und seine Schubkette (30) mit einer Kraftübertragungseinrichtung (40 - 47) mit der rückwärts vom Fahrzeug (70) abzuschiebenden Last, z.B. einem Container (77) verbindbar ist und diese Kraftübertragungseinrichtung (40 - 47) die Schub-/Zugkraft der mindestens einen Schubkette (30) in eine Senk-/Hubbewegung umzulenken vermag.

6. Transportfahrzeug mit lastverschiebe-Rüstsatz nach Anspruch 1 und 5, dadurch gekennzeichnet, daß die Schubkette (30) über Hubwinkel (41), drehbar befestigt an Wälzwagen (40), und über die Traglasche (42) mit dem Containerträger (47) verbunden ist und hubwinkel (41) auch ohne Traglasche (42) mit dem Containerträger (47) verbindbar ist.

7. Transportfahrzeug mit Lastverschiebe-Rüstsatz nach Anspruch 1, dadurch gekennzeichnet, daß mindestens 1 Rüstsatz (16 - 22) am Rahmen (1) eines Fahrzeugs (70) angebracht ist und seine Schubkette (17) mit dem Fahrwerksblock (10) zum Bewegen der Achsen (12) gegenüber dem Fahrzeugrahmen ausgestattet ist und die Federn (13) der Achsen (12) als Luftfedern ausgeführt oder mit besonderen Höhenverstellgliedern ausgestattet sind.

8. Transportfahrzeug mit Lastveschiebe-Rüstsatz nach Anspruch 1 und 7, dadurch gekennzeichnet, daß der Rahmen (1) durch Einstellen einer unterschiedlichen Höhe, z.B. der Luftfedern nach hinten bis zum Boden neigbar ist und durch bewegliche Anlenkung des Königszapfens (3) mit der Königszapfenplatte (4) an den Rahmen (1) des Fahrzeugs (70) mit einer Zugmaschine verbunden bleiben kann und durch Betätigen der Luftfedern (13) oder anderer Höhenverstellglieder zumindest einer Seite eine Niveauangleichung der Laderflâche (71) für den Querumschlag nach Anspruch 2 bewirkbar ist.

9. Transportfahrzeug mit Lastverschiebe-Rüstsatz nach Anspruch 1,2,7 und 8, dadurch gekennzeichnet, daß z.B. zwischen den Achsen (12) und Federn (13) und Königszapfensplatte (4) und Rahmen (1) Belastungsgeber (9) angebracht sind, diese mit einem Auswetegerät verbunden sind und dieses Auswertegerät (15) mit Impulsgebern für Schubkettenantrieb (18) und andere Funktionen ausgestattet ist.

10. Transportfahrzeug mit Lastverschiebe-Rüstsats nach Anspruch 1,5 und 7, dadurch gekennzeichnet, daß als Stellglied pneumatische oder hydraulische Zylinder in Verbindung mit Schubketten oder andere Stellglieder , z.B. angetriebene Seile oder Ketten, Zahnstangen oder Linearantriebe eingebaut sind.

11. Transportfahrzeug mit Lastverschieberüstsatz nach Anspruch 1,2 und 5, dadurch gekennzeichnet, daß

8

der Austrittswinkel der Schubkette (30,50) schräg nach oben gerichtet ist und die Last, z.B. der Container (77) am gegenüberliegenden Ende mit dem Fahrzeugrahmen (1) mit um eine waagerechte Achse z.B. (21) drehbaren Twislocks (61) mit diesen verbunden ist.

12. Transportfahrzeug mit Lastverschieberüstsatz nach Anspruch 1, dadurch gekennzeichnet, daß die Lastverschiebe-Einrichtungen durch vornehmlich rollende oder gleitende etwa horizontale Bewegungen einen Lastumschlag quer zu einer Fahrzeug-Längsachse unter Aufteilung der ggflls notwendigen Hubarbeit für das Abheben von aufrecht stehenden Verriegelungszapfen z.B. auf Waggons in zeitversetzte Teilhübe und ein Auf- und Abladen über das Fahrzeugheck bei minimalen negativem Neigungswinkel oder auch positivem Neigunswinkel ermöglichen.

13. Transportfahrzeug mit Lastverschiebe-Rüstsats nach Anspruch 1, dadurch gekennzeichnet, daß durch Austreten der Schubketten (30,50) in nach oben schrägen Weise und einseitiger tiger drehbar Befestigung der Last diese enseitig angehoben, gekippt, wird.

## Claims

1. Transport vehicle with a load displacement setting-up tool set with length-changeable thrust or pushing means, characterized in that the pushing means are constituted by at least one thrust chain (17, 30, 50) which, after leaving the thrust-chain drive (18, 31, 51), constitute an endlessly extendable pushing and drawing-type connecting rod being stiffened in both degrees of freedom and that an adaptable power-transmission unit is located at the end of the pushing means.

2. Transport vehicle with load-displacement setting-up tool set acc. to claim 1. characterized in that partial sections of the thrust chain (5) feature different degrees of freedom.

3. Transport vehicle with load displacement setting-up tool set acc. to claims 1 and 2, characterized in that at least two setting-up tool sets (50 - 65) can be displaced in their pushing direction transverse to the driving direction of a vehicle (70) and in the direction of the longitudinal vehicle axis, if necessary, and that they are folded into the vehicle section when they are not in use.

4. Transport vehicle with a load-displacement setting-up tool set acc. to claims 1, 2 and 3, characterized in that the thrust chains (50) are connected to rolling cars (53, 55) and particularly in that the outer rolling cars (53) are shaped in a key-type formation, movable on rails (58, 58) or other rolling areas, gripping under container stops (60) or under container corner fittings (78) or other parts of a container or a load and that the thrust chains (50) can be actuated in a timely deferred or offset manner for the distribution of the lifting work offset in terms of time.

5. Transport vehicle with a load displacement setting-up tool set acc. to claim 1, characterized in that at least 1 setting-up tool set (30 - 47) is located at the front of a vehicle (70) or its loading area (71) and in that its thrust chain (30) is connectable by means of a power transmission unit (40 - 47) with the load to be pushed off towards the rear from the vehicle (70), e.g. a container (77), and in that this power transmission unit (40 - 47) can convert the pushing/pulling force of at least one thrust chain (30) into a lowering/lifting movement.

6. Transport vehicle with a load displacement setting-up tool acc. to claims 1 and 5, characterized in that the thrust chain (30) is connected via lifting angles (41), pivotally-fastened to rolling cars (40), with the container carrier (47) as well as via the carrying shackle (42) and in that lifting angles (41) can be connected to the container carrier (47), even without incorporating a carrying shackle (42).

7. Transport vehicle with load displacement setting-up tool set acc. to claim 1, characterized in that at least 1 setting-up tool set (16 - 22) is located at the frame (1) of a vehicle (70) and that its thrust chain (17) is equipped with the undercarriage block (10) for moving the axes (12) in an opposite direction to the vehicle frame and that the springs (13) of the axes (12) are designed as pneumatic or air springs or are equipped with special height-adjusting elements.

8. Transport vehicle with a load-displacement setting-up tool set acc. to claims 1 and 7, characterized in that, by adjusting to a different height, e.g. involving the pneumatic springs, the frame (1) can be tilted back towards the ground and that it can remain connected to a tractive machine by a movable linking of the king pin (3) with the king-pin plate (4) to the frame (1) of the vehicle (70) and that a level or height adaptation of the loading area (71) can be effected for transverse transloading operations as per claim 2 by means of actuating on at least one side.

9. Transport vehicle with a load displacement setting-up tool set acc. to claims 1, 2, 7 and 8, characterized in that, between the axes (12) and the springs (13) and the king pin plate (4) and the frame (1) for example, load senders (9) are arranged which are connected to an evaluating unit; this evaluation unit (15) is equipped with pulse generators for the thrust chain drive (18) and for other functions.

10. Transport vehicle with a load-displacement setting-up tool set acc. to claims 1,5 and 7, characterized in that there are installed pneumatic or hydraulic cylinders connected to thrust chains as actuators or that other actuators are installed, e.g. driven ropes or chains, gear racks or linear drives.

11. Transport vehicle with a load-displacement setting-up tool set acc. to claims 1, 2 and 5, characterized in that the outlet or leaving angle of the thrust chains (30, 50) is obliquely directed upwards and in that the load, e.g. the container (77), is connected to them at the opposite end with the vehicle (1) by means of a twistlock (61) being rotatable around a horizontal axis, for example (21).

12. Transport vehicle with a load-displacement setting-up tool set acc. to claim 1, characterized in that the load-displacement units make it possible, mainly by rolling or sliding and approximately horizontal movements, to perform a transloading operation transverse to a longitudinal vehicle axis by means of a distribution of the possibly required lifting to time-deferred partial strokes for lifting upright locking pins on, e.g. waggons and, thus, loading and unloading operations via the vehicle rear end at a min. negative or even positive inclination angle.

13. Transport vehicle with a load-displacement setting-up tool set acc. to claim 1, characterized in that the load is dumped or tilted as it is lifted on one side due to the oblique upward emergence of the thrust chains (30, 50) and rotatable fastening of this load on one side.

**Revendications**

1. Véhicule de transport avec un équipement de décalage de charge avec des moyens de poussée dans le sens de la longueur, caractérisé en ce que les moyens de poussée sont constitués d'au moins une chaîne de poussée (17, 30, 50) qui se raidit dans les deux degrés de liberté et forme dès sa sortie de l'entraînement à chaîne (18, 31, 51) une barre de poussée et de traction susceptible d'être prolongée à souhait et qu'au bout des moyens de poussée est monté un dispositif de transmission de force adaptable.

2. Véhicule de transport avec équipement de décalage de charge selon la revendication 1, caractérisé en ce que la chaîne de poussée (50) est équipée de sections à degrés de liberté différents.

3. Véhicule de transport avec équipement de décalage de charge selon les revendications 1 et 2, caractérisé en ce qu'au moins deux équipements (50 - 65) sont montés avec le sens de poussée en travers du sens de marche d'un véhicule (70) et, suivant les besoins, décalables dans l'axe longitudinale du véhicule, et escamotables dans le profil du véhicule, lorsqu'ils ne sont pas employés.

4. Véhicule de transport avec équipement de décalage de charge selon les revendications 1, 2 et 3, caractérisé en ce que les chaînes de poussée (50) sont reliées à des chariots primitifs de fonctionnement (53, 55), en particulier les chariots primitifs de fonctionnement extérieurs (53) sont en forme de cales, déplaçables sur rails (58, 58') ou sur toutes autres surfaces de roulement, et saisissent sous des butées de container (60) ou sous des pièces de coins de container (78) ou d'autres pièces d'un container ou d'une charge, et que les châines de poussée sont susceptibles d'être manoeuvrées pour la répartition temporisée du travail de levage.

5. Véhicule de transport avec équipement de décalage de charge selon la revendication 1, caractérisé en ce qu'au moins un équipement (30-47) est monté à la face frontale d'un véhicule (70) ou de sa surface de chargement (71) et que sa chaîne de poussée (30) peut être reliée à un dispositif de transmission de force (40 - 47) avec la charge à pousser à l'arrière du véhicule (70) par ex. un container (77) et que ce dispositif de transmission de force (40 - 47) est en mesure de commuter la force de traction/de poussée d'au moins une chaîne de poussée (30) en un mouvement de levage/d'abaissement.

6. Véhicule de transport avec équipement de décalage de charge selon les revendications 1 et 5, caractérisé en ce que la chaîne de poussée (30) est fixée de façon rotative aux chariots primitifs de fonctionnement (40) par l'intermédiaire d'équerre de levage (41) et reliée par la bretelle (42) au support de container (42) et peut être reliée même sans bretelle au support de container (47) par les équerres de levage (41).

7. Véhicule de transport avec équipement de décalage de charge selon la revendication 1, caractérisé en ce qu'au moins 1 équipement (16 - 22) est monté au cadre (1) du véhicule (70) et sa chaîne de poussée (17) avec le bloc du châssis est équipée pour déplacer l'axe (12) par rapport au cadre du véhicule et que les ressorts (13) de l'axe (12) sont équipés comme coussin d'air ou avec des éléments particuliers de réglage en hauteur.

8. Véhicule de transport avec équipement de décalage de charge selon les revendications 1 et 7, caractérisé en ce que le cadre (1) par le réglage d'une hauteur différente, par exemple des coussins d'air, peut être incliné vers l'arrière jusqu'au sol et qu'il peut rester lié un tracteur par une articulation mobile du tourillon d'attelage (3) à la selle à crochet et crampon (4) et que l'on peut ajuster le niveau de la surface de chargement (71) au moins d'un côté en actionnant le coussin d'air (13) ou tout autre élément de réglage en hauteur pour un transbordement transversal selon la revendication 2.

9. Véhicule de transport avec équipement de décalage de charge selon les revendications 1, 2, 7 et 8, caractérisé en ce que sont montés des capteurs de charge par ex. entre les axes (12) et ressorts (13) et la selle à crochets et crampon (4) et le cadre (1), ces capteurs étant reliés à des appareils de restitution, et ceux-ci (15) étant équipés de capteurs d'impulsions pour l'entraînement de la chaîne de poussée et d'autres fonctions.

10. Véhicule de transport avec équipement de décalage de charge selon la revendication 1, 5 et 7 caractérisé en ce que des vérins pneumatiques ou hydrauliques sont montés comme éléments de réglage, liés à des chaînes de poussée ou d'autres éléments de réglage, par ex. des cordes ou chaînes entraînées, des crémaillères ou des entraînements linéaires.

11. Véhicule de transport avec équipement de décalage de charge selon la revendication 1, 2 et 5, caractérisé en ce que l'angle de sortie de la chaîne de poussée (30, 50) est dirigé en biais vers le haut et la charge, par ex. le container (77) est relié à celle-ci à l'extrémité opposée avec le cadre du véhicule (1) au moyen de verrous par ex, tournants autour d'un axe horizontal (21).

12. Véhicule de transport avec équipement de décalage de charge selon la revendication 1, caractérisé en ce que les installations de décalage de charge permettent un transbordement de charges en travers d'une axe de véhicule par des mouvements principalement roulants ou glissants à peu près horizontaux, en répartissant le travail de levage éventuellement nécessaire pour le soulèvement de tourillons de verrouillage debouts, par ex. sur des waggons, par élévations partielles décalées dans le temps et un chargement et déchargement par l'arrière du véhicule dans un angle d'inclinaison négatif minimal ou un angle d'inclinaison positif.

13. Véhicule de transport avec équipement de décalage de charge selon la revendication 1, caractérisé en ce qu'en raison de la sortie de la chaîne de poussée (30, 50) vers le haut dans une position inclinée et une fixation rotative de la charge d'un côté, celle-ci est soulevée, basculée d'un côté.

Fig.1

Fig.2

Fig. 3

Fig. 4

Fig.5

Fig. 6

Fig. 7

Fig. 8